# FASCICULE DE BREVET EUROPEEN

(11) **EP 2 957 938 B1**
(45) Date de publication et mention de la délivrance du brevet: **22.03.2017**
(21) Numéro de dépôt: 15170699.1
(22) Date de dépôt: 04.06.2015
(51) Int. Cl.: G02B 6/44, G02B 6/50, H01B 7/18

(54) **CÂBLE LONGITUDINAL ET PROCÉDÉ D'INSTALLATION D'UN TEL CÂBLE**
LÄNGSKABEL UND VERLEGEVERFAHREN EINES SOLCHEN KABELS
LONGITUDINAL CABLE AND METHOD FOR INSTALLING SUCH A CABLE

(30) Priorité: 18.06.2014 FR 1455592
(43) Date de publication de la demande: 23.12.2015
(73) Titulaire: SNCF Mobilités, 93200 Saint-Denis (FR)
(72) Inventeur: Opigez, Jérôme, 59173 Ebblinghem (FR)
(74) Mandataire: Argyma

(56) Documents cités:
- DE-U1- 20 201 588
- FR-A1- 2 660 790
- GB-A- 2 498 581
- US-A1- 2010 181 093

## Description

### DOMAINE TECHNIQUE GENERAL ET ART ANTERIEUR

La présente invention concerne le domaine du câblage, c'est-à-dire, la mise en place de câbles dans un bâtiment, un véhicule ou autre. Par la suite, on entend par câble aussi bien un câble de transport de puissance (électricité, gaz, etc.), qu'un câble de transport d'information (internet, etc.).

Le câblage d'un véhicule ferroviaire est une opération délicate compte tenu de la configuration du véhicule ferroviaire (présence d'escaliers, couloirs de transition entre deux voitures, etc.). En pratique, il est nécessaire de faire passer des câbles longitudinaux de grande longueur derrière des cloisons ou des équipements. Par la suite, la zone dans laquelle doit être positionné le câble lors de son utilisation est désignée « zone d'installation ».

De manière connue, pour installer un câble, un opérateur utilise un tire-câble qui est relié à une extrémité du câble à installer. Un tire-câble se présente sous la forme d'un lien flexible de faible section au regard du câble à installer. Du fait de sa faible section et de sa flexibilité, le tire-câble est positionné de manière aisée par un opérateur dans la zone d'installation. Pour positionner le câble à installer en lieu et place du tire-câble dans la zone d'installation, un opérateur tire sur l'extrémité libre du tire-câble afin de déplacer le câble à installer dans la zone d'installation. Autrement dit, le tire-câble permet de guider le déplacement du câble à installer dans la zone d'installation en lui ouvrant la voie.

Une telle méthode d'installation d'un câble est difficile à mettre en oeuvre étant donné qu'elle nécessite la mise en place préliminaire d'un tire-câble, ce qui allonge la durée d'installation. En effet, il est nécessaire, d'une part, de raccorder le tire-câble au câble à installer et, d'autre part, de positionner le tire-câble dans la zone d'installation.

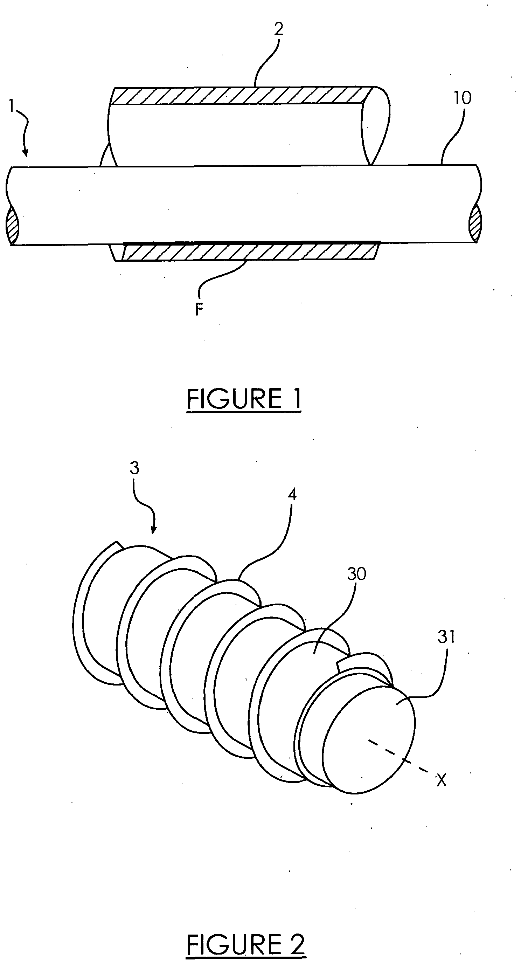

En outre, le déplacement du câble est une opération pénible pour l'opérateur du fait des frottements de l'enveloppe de protection du câble avec les parois de sa zone d'installation. A titre d'exemple, il est représenté à la figure 1 un câble 1 monté dans une zone d'installation 2 se présentant sous la forme d'une gaine. Pour déplacer le câble 1, un opérateur doit exercer une force de traction importante sur le câble 1 pour s'opposer aux frottements F entre l'enveloppe de protection 10 du câble 1 et la gaine 2.

Afin d'éliminer au moins certains de ces inconvénients, on connaît par la demande de brevet DE20201588U1 un câble dont l'enveloppe extérieure comporte un relief afin de diminuer les frottements lorsque le câble doit être, par exemple, introduit dans une gaine longitudinale. Il n'en demeure pas moins que le câble reste difficile à installer pour l'opérateur qui doit tirer sur le câble lors de son installation. On connaît par la demande de brevet FR2660790A1 un câble de télécommunication comprenant une ailette hélicoïdale adaptée pour être déplacée dans une conduite par injection d'air comprimé.

L'invention a donc pour but de remédier à ces inconvénients en proposant un câble de structure améliorée pouvant être installé avec une pénibilité réduite.

### PRESENTATION GENERALE DE L'INVENTION

A cet effet, l'invention concerne un câble longitudinal comportant une enveloppe de protection qui comprend un relief extérieur. L'invention est remarquable en ce que ledit relief extérieur s'étend de manière hélicoïdale selon la longueur dudit câble.

Un tel relief hélicoïdal permet, d'une part, de limiter les frottements lors de la mise en place du câble dans une zone d'installation et, d'autre part, de favoriser un déplacement axial dudit câble par rotation dudit câble. Autrement dit, le câble peut avantageusement être mis en place à la manière d'une vis en appliquant une rotation à une extrémité du câble, le relief extérieur hélicoïdal convertissant avantageusement les efforts radiaux en effort axiaux.

De plus, la forme hélicoïdale permet de contourner tout élément en saillie dans ladite zone d'installation. En effet, si le relief extérieur entre en contact avec un tel élément en saillie, il suffit de faire tourner le câble pour déplacer le relief extérieur pour contourner ledit élément en saillie. Un tel avantage n'est pas possible dans l'art antérieur étant donné que la longueur radiale du relief extérieur était constante à la périphérie du câble pour une section transversale donnée.

De préférence, ledit câble s'étendant selon un axe, ledit relief extérieur s'étend radialement audit axe dans un plan de coupe transversal dudit câble. Ainsi, la surface de contact transversal est limitée, ce qui réduit les frottements.

De manière préférée, ledit relief extérieur possède une épaisseur radiale constante, de préférence, comprise entre 5mm et 50mm. Ainsi, le relief est homogène sur la longueur, ce qui facilite la mise en place du câble.

Selon un aspect préféré, le relief extérieur est en matériau à faible coefficient de frottement, en particulier, en téflon.

De préférence, le relief extérieur est issu de matière de l'enveloppe de protection, ce qui diminue le coût de fabrication du câble.

Selon un autre aspect préféré, ledit relief extérieur est discontinu pour diminuer les frottements. De préférence, ledit relief extérieur se présente sous la forme d'une pluralité de reliefs élémentaires, en particulier, des roulements élémentaires afin d'améliorer le déplacement du câble en rotation ou en translation selon son axe. La pénibilité des opérateurs est ainsi fortement réduite. De manière préférée, chaque roulement élémentaire se présente sous la forme d'une bille élémentaire montée dans un logement élémentaire fixé dans ladite enveloppe de protection, de préférence, par sertissage.

De manière alternative, chaque relief élémentaire est fixe, c'est-à-dire, dénué d'élément mobile. Avantageusement, chaque relief élémentaire possède une surface incurvée, en particulier, partiellement sphérique afin de limiter les frottements.

De manière avantageuse, le câble comporte un corps central logé dans ladite enveloppe de protection. Ainsi, le corps central peut véhiculer de la puissance (électricité, gaz, etc.) ou de l'information (internet, etc.). De préférence, ledit corps central est une fibre optique. Grâce à l'invention, les efforts de flexion appliqués à la fibre optique sont limités étant donné que le déplacement du câble se fait par rotation. Les risques d'endommagement de la fibre optique sont avantageusement réduits par comparaison à l'art antérieur.

L'invention concerne également un procédé d'installation d'un câble tel que présenté précédemment dans une zone d'installation, ledit câble s'étendant selon un axe, le procédé comportant une étape de rotation dudit câble autour de son axe de manière à faciliter sa translation axiale dans ladite zone d'installation. Grâce au procédé selon l'invention, on tire avantage de la forme hélicoïdale du relief extérieur afin de faciliter le déplacement axial du câble tout en permettant de contourner tout élément en saillie dans ladite zone d'installation comme présenté précédemment.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation en coupe longitudinale d'un câble dans une gaine ;
- la figure 2 est une représentation schématique d'un câble ;
- la figure 3 est une représentation schématique d'une forme de réalisation d'un câble selon l'invention ;
- la figure 4 est une représentation schématique rapprochée du relief du câble de la figure 3 ; et
- la figure 5 est une représentation schématique d'une étape d'installation d'un câble selon l'invention dans une zone d'installation.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

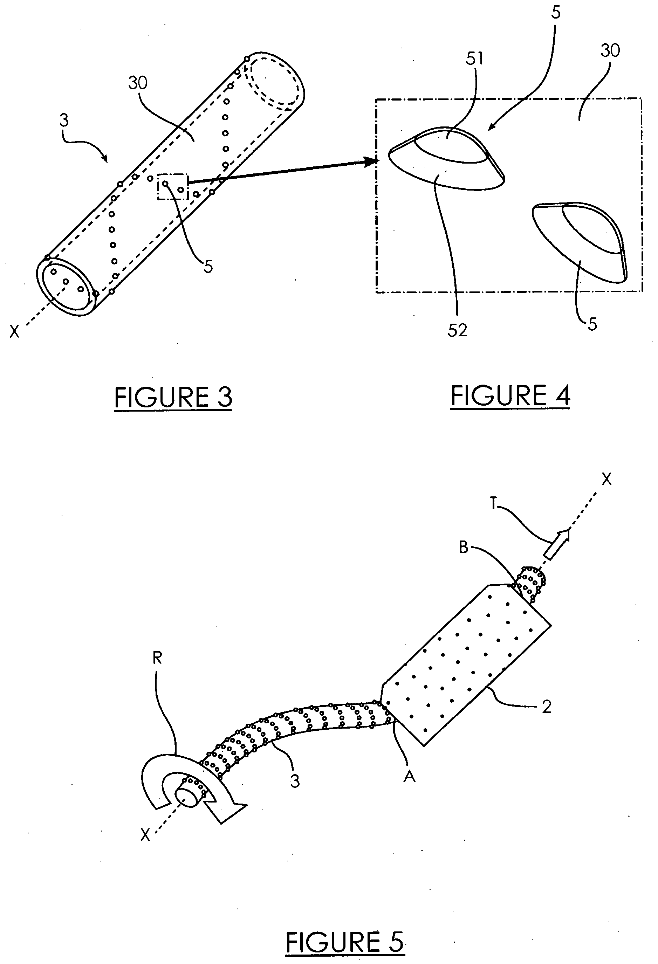

En référence aux figures 2 et 3, il est représenté un câble longitudinal 3 s'étendant axialement selon un axe X et qui comprend un corps central longitudinal 31 monté dans une enveloppe de protection 30.

Dans cet exemple, le corps central longitudinal 31 possède une section ronde mais il va de soi qu'elle pourrait être différente par exemple ovale ou rectangulaire. Le corps central 31 peut être plein, par exemple en cuivre pour la circulation de courant, ou creux pour former un canal de circulation. A titre d'exemple, le corps central 31 peut se présenter sous la forme d'une fibre optique pour la conduction de lumière.

L'enveloppe de protection 30 possède de préférence une épaisseur constante pour protéger de manière homogène le corps central 31. De manière préférée, l'enveloppe de protection 30 est en matériau amortisseur du type PVC ou élastomère afin de fournir une protection mécanique contre les chocs ainsi qu'une protection électrique. Il va de soi que la nature de l'enveloppe de protection 30 est définie pour s'adapter à la nature du corps central 31.

En référence aux figures 2 et 3, l'enveloppe de protection 30 comporte un relief extérieur qui s'étend de manière hélicoïdale selon la longueur dudit câble 10.

Grâce à son relief hélicoïdal, le câble 3 peut se déplacer longitudinalement selon son axe X lorsqu'un couple de rotation autour dudit axe X est appliqué à une extrémité du câble 3. Autrement dit, à la manière d'une vis, le câble 3 peut être tourné autour de son axe X pour se déplacer longitudinalement.

En référence à la figure 2, le relief extérieur se présente sous la forme d'une lame hélicoïdale continue 4, appelée également jonc hélicoïdal, s'étendant radialement à l'axe X du câble 3. De manière préférée, le pas du relief hélicoïdal est de l'ordre de 10 à 50 mm afin de faciliter sa mise en place.

De manière préférée, la lame hélicoïdale continue 4 est réalisée dans un matériau à faible coefficient de frottement, notamment, en téflon. Dans cet exemple, l'enveloppe de protection 30 est entaillée pour former un logement pour recevoir la lame hélicoïdale continue 4. De préférence, la fixation de la lame hélicoïdale continue 4 avec l'enveloppe de protection 30 est réalisée à force ou par collage.

Selon un autre aspect non représenté, la lame hélicoïdale 4 est issue de matière de l'enveloppe de protection 30 de manière à réduire le coût de fabrication dudit câble 3.

Une forme de réalisation de l'invention est décrite en référence aux figures 3 et 4. Les références utilisées pour décrire les éléments de structure ou fonction identique, équivalente ou similaire à celles des éléments de la figure 2 sont les mêmes, pour simplifier la description. D'ailleurs, l'ensemble de la description du mode de réalisation de la figure 2 n'est pas reprise, cette description s'appliquant aux éléments des figures 3 et 4 lorsqu'il n'y a pas d'incompatibilités. Seules les différences notables, structurelles et fonctionnelles, sont décrites.

Selon cette forme de réalisation de l'invention, en référence à la figure 3, le relief extérieur hélicoïdal se présente sous la forme d'une pluralité de reliefs élémentaires s'étendant de manière individuelle radialement à l'axe du câble. De manière préférée, chaque relief élémentaire se présente sous la forme d'un roulement élémentaire 5. En référence à la figure 4, chaque roulement élémentaire 5 se présente sous la forme d'une bille élémentaire 51 qui est montée dans un logement élémentaire 52 fixé dans l'enveloppe extérieure de protection 30, de préférence, par sertissage. De telles billes élémentaires 51 forment une pluralité de roulements à bille qui limitent de manière importante tout frottement. De préférence, les billes élémentaires 51 sont réalisées dans un matériau à faible coefficient de frottement, notamment, en téflon.

De manière alternative, chaque relief élémentaire est fixe, c'est-à-dire, dénué d'élément mobile. Avantageusement, chaque relief élémentaire possède une surface incurvée, en particulier, partiellement sphérique afin de limiter les frottements. Autrement dit, chaque relief élémentaire possède sensiblement la même forme qu'un roulement élémentaire à la différence qu'un relief élémentaire fixe ne comporte pas de bille élémentaire mobile.

Un exemple de mise en oeuvre de l'invention va être dorénavant être présenté en référence à la figure 5 pour l'installation d'un câble 3 dans une zone d'installation longitudinale 2 comportant une ouverture d'entrée A et une ouverture de sortie B. Dans cet exemple, un opérateur introduit une première extrémité du câble 3 dans longitudinale 2 comportant une ouverture d'entrée A et une ouverture de sortie B. Dans cet exemple, un opérateur introduit une première extrémité du câble 3 dans l'ouverture d'entrée A puis il applique un effort de rotation R audit câble 3 autour de son axe X. Lorsque que le câble 3 entre en contact avec une paroi intérieure de la zone d'installation 2, son relief extérieur de forme hélicoïdale prend appui contre ladite paroi intérieure pour permettre sa translation axiale T dans ladite zone d'installation 2 jusqu'à l'ouverture de sortie B. Grâce à la forme avantageuse du relief extérieur du câble 3, une rotation R du câble 3 est convertie en une translation axiale T. Ainsi, la mise en place du câble 3 peut être réalisée avec une pénibilité réduite par un opérateur. En outre, la rotation R du câble 3 peut être motorisée afin d'éviter toute pénibilité.

De plus, la forme hélicoïdale du relief extérieur du câble 3 permet de contourner tout élément en saillie dans ladite zone d'installation 2. En effet, si le relief extérieur entre en contact avec un tel élément en saillie, il suffit de faire tourner le câble 3 pour déplacer le relief extérieur et contourner ledit élément en saillie. Un tel avantage n'est pas possible dans l'art antérieur étant donné que la longueur radiale du relief extérieur était constante à la périphérie du câble 3 pour une section transversale donnée.

Par ailleurs, le câble 3 est mis en place directement dans sa zone d'installation 2 sans recourir à des équipements auxiliaires tels qu'un tire-câble, ce qui est avantageux.

## Revendications

1. Câble longitudinal (3) comportant une enveloppe de protection (30) qui comprend un relief extérieur (4, 5) s'étendant de manière hélicoïdale selon la longueur dudit câble (3), câble (3) **caractérisé en ce que** ledit relief extérieur (4, 5) est discontinu.

2. Câble longitudinal (3) selon la revendication 1, dans lequel, ledit câble (3) s'étendant selon un axe X, ledit relief extérieur (4, 5) s'étend radialement audit axe X dans un plan de coupe transversal dudit câble (3).

3. Câble longitudinal (3) selon la revendication 2, dans lequel, ledit relief extérieur (4, 5) possède une épaisseur radiale constante, de préférence, comprise entre 5mm et 50mm.

4. Câble longitudinal (3) selon l'une des revendications 1 à 3, dans lequel le relief extérieur (4) est en matériau à faible coefficient de frottement, en particulier, en téflon.

5. Câble longitudinal selon l'une des revendications 1 à 4, dans lequel, ledit relief extérieur se présente sous la forme d'une pluralité de reliefs élémentaires (5), de préférence, des roulements élémentaires.

6. Câble longitudinal selon la revendication 5, dans lequel chaque roulement élémentaire (5) comporte une bille élémentaire (51) qui est montée dans un logement élémentaire (52) fixé dans l'enveloppe de protection (30), de préférence, par sertissage.

7. Câble longitudinal selon l'une des revendications 1 à 6 comportant un corps central (31) logé dans ladite enveloppe de protection (30).

8. Câble longitudinal selon la revendication 7, dans lequel ledit corps central (31) est une fibre optique.

9. Procédé d'installation d'un câble (3) selon l'une des revendications 1 à 8 dans une zone d'installation (2), ledit câble (3) s'étendant selon un axe X, le procédé comportant une étape de rotation (R) dudit câble (3) autour de son axe X de manière à faciliter sa translation (T) axiale dans ladite zone d'installation (2).

## Patentansprüche

1. Longitudinales Kabel (3), das eine Schutzummantelung (30) umfasst, die ein äußeres Relief (4, 5) umfasst, das sich spiralförmig entlang der Länge des Kabels (3) erstreckt, wobei das Kabel (3) **dadurch gekennzeichnet ist, dass** das äußere Relief (4, 5) diskontinuierlich ist.

2. Longitudinales Kabel (3) nach Anspruch 1, wobei sich das Kabel (3) entlang einer Achse X erstreckt, wobei das äußere Relief (4, 5) sich radial von der Achse X in einer Schnittebene quer zu dem Kabel (3) erstreckt.

3. Longitudinales Kabel (3) nach Anspruch 2, wobei das äußere Relief (4, 5) eine konstante radiale Dicke aufweist, die vorzugsweise zwischen 5 mm und 50 mm liegt.

4. Longitudinales Kabel (3) nach einem der Ansprüche 1 bis 3, wobei das äußere Relief (4) aus einem Material mit einem niedrigen Reibungskoeffizienten, insbesondere Teflon, besteht.

5. Longitudinales Kabel nach einem der Ansprüche 1 bis 4, wobei das äußere Relief in Form mehrerer elementarer Reliefs (5), vorzugsweise elementaren Rollen, ausgebildet ist.

6. Longitudinales Kabel nach Anspruch 5, wobei jede elementare Rolle (5) eine elementare Kugel (51) umfasst, die in einem elementaren Gehäuse (52) angebracht ist, das in der Schutzummantelung (30) vorzugsweise durch Crimpen befestigt ist.

7. Longitudinales Kabel nach einem der Ansprüche 1 bis 6, das einen zentralen Körper (31) umfasst, der in der Schutzummantelung (30) untergebracht ist.

8. Longitudinales Kabel nach Anspruch 7, wobei der zentrale Körper (31) eine optische Faser ist.

9. Verfahren zur Montage eines Kabels (3) nach einem der Ansprüche 1 bis 8 in einem Montagebereich (2), wobei sich das Kabel (3) entlang einer Achse X erstreckt, wobei das Verfahren einen Schritt des Drehens (R) des Kabels (3) um seine Achse X umfasst, um seine axiale Translation (T) in dem Montagebereich (2) zu erleichtern.

## Claims

1. Longitudinal cable (3) comprising a protective casing (30) that comprises an external relief (4, 5) extending helically along the length of said cable (3), a cable (3) **characterised in that** said external relief (4, 5) is discontinuous.

2. Longitudinal cable (3) according to claim 1, in which, said cable (3) extending along an axis X, said external relief (4, 5) extends radially to said axis X in a transverse cutting plane of said cable (3).

3. Longitudinal cable (3) according to claim 2, in which said external relief (4, 5) has a constant radial thickness, preferably between 5 mm and 50 mm.

4. Longitudinal cable (3) according to one of claims 1 to 3, in which the external relief (4) is made from a material with a low coefficient of friction, in particular Teflon.

5. Longitudinal cable according to one of claims 1 to 4, in which said external relief is in the form of a plurality of elementary reliefs (5), preferably elementary roller bearings.

6. Longitudinal cable according to claim 5, in which each elementary roller bearing (5) comprises an elementary ball (51) that is mounted in an elementary housing (52) fixed in the protective casing (30), preferably by crimping.

7. Longitudinal cable according to one of claims 1 to 6, comprising a central body (31) housed in said protective casing (30).

8. Longitudinal cable according to claim 7, in which said central body (31) is an optical fibre.

9. Method for installing a cable (3) according to one of claims 1 to 8 in an installation zone (2), said cable (3) extending along an axis X, the method comprising a step of rotating (R) said cable (3) about its axis X so as to facilitate its axial translation (T) in said installation zone (2).
